# EUROPÄISCHE PATENTANMELDUNG

(11) **EP 2 394 858 A1**
(43) Veröffentlichungstag der Anmeldung: **14.12.2011**
(21) Anmeldenummer: 10165285.7
(22) Anmeldetag: 08.06.2010
(51) Int. Cl.: B60R 11/02

(54) **An Fahrzeuglenkrad befestigbares elektronisches Gerät**

(71) Anmelder: Wow! Würth Online World GmbH, 74653 Künzelsau-Gaisbach (DE)
(72) Erfinder: Martin, Dicke-Kurtenbach, 65594, Runkel - Eschenau (DE)
(74) Vertreter: Dilg, Haeusler, Schindelmann Patentanwaltsgesellschaft mbH

(57) **Zusammenfassung**

Elektronisches Gerät (100) zum Befestigen an einem Lenkrad (120) eines Fahrzeugs (300), wobei das elektronische Gerät (100) ein Gehäuse (102), das eine elektronische Funktionseinheit (202) enthält, und eine Befestigungseinrichtung (106) aufweist, die an dem Gehäuse (102) angebracht ist und zum Befestigen an dem Lenkrad (120) eingerichtet ist.

## Beschreibung

Die Erfindung betrifft ein elektronisches Gerät. Die Erfindung betrifft ferner eine Lenkrad-Anordnung. Die Erfindung betrifft darüber hinaus ein Fahrzeug. Die Erfindung betrifft außerdem ein Verfahren zum Befestigen eines elektronischen Geräts an einem Lenkrad eines Fahrzeugs. Die Erfindung betrifft ferner eine Verwendung.

Im Rahmen einer Funktionsdiagnose und Abgasuntersuchung in Kraftfahrzeugen kann zum Beispiel ein elektronisches Gerät eingesetzt werden, wie es von der Anmelderin unter der Typenbezeichnung IQ 310 angeboten wird (http://www.wow-portal.com/wow-portal/de/products/pkwdiagnose/iq_310/iQ310.html).

Bei der Verwendung von mobilen Computern und/oder Anzeigegeräten für die Diagnose und Abgasuntersuchung in Kraftfahrzeugen ist die Handhabbarkeit der mobilen Computer bzw. Anzeigegeräte nicht immer benutzerfreundlich. Diese mobilen Computersysteme und/oder Anzeigegeräte müssen entweder in der Hand gehalten oder abgelegt werden. Bei der Verwendung als Handheld-Gerät hat der Anwender nur eine Hand frei. Somit sind Interaktionen, die während einer Diagnose getätigt werden müssen, bei denen der Anwender beide Hände benötigt, nicht oder nur sehr umständlich zu bewerkstelligen.

Eine Begrenzung der Benutzerfreundlichkeit stellt das unqualifizierte Ablegen der Geräte im Fahrzeug dar. Dabei können diese empfindlichen Geräte durch Abrutschen und Herunterfallen oder Vibration beschädigt oder zerstört werden. Es ist eine Aufgabe der vorliegenden Erfindung, ein elektronisches Gerät zur Verwendung mit einem Fahrzeug benutzerfreundlich und betriebssicher auszugestalten.

Diese Aufgabe wird durch ein elektronisches Gerät, durch eine Lenkrad-Anordnung, durch ein Fahrzeug, durch ein Verfahren zum Befestigen eines elektronischen Geräts an einem Lenkrad eines Fahrzeugs und durch eine Verwendung mit den Merkmalen gemäß den unabhängigen Patentansprüchen gelöst.

Gemäß einem Ausführungsbeispiel der vorliegenden Erfindung ist ein elektronisches Gerät zum Befestigen an einem Lenkrad eines Fahrzeugs geschaffen, wobei das elektronische Gerät ein Gehäuse, das eine elektronische Funktionseinheit enthält, und eine Befestigungseinrichtung aufweist, die an dem Gehäuse angebracht ist und zum Befestigen an dem Lenkrad eingerichtet ist.

Gemäß einem anderen Ausführungsbeispiel der vorliegenden Erfindung ist eine Lenkrad-Anordnung für ein Fahrzeug bereitgestellt, wobei die Lenkrad-Anordnung ein Lenkrad für das Fahrzeug und ein elektronisches Gerät mit den oben genannten Merkmalen aufweist, das zum Befestigen an dem Lenkrad eingerichtet ist.

Gemäß noch einem anderen Ausführungsbeispiel der vorliegenden Erfindung ist ein Fahrzeug geschaffen, aufweisend ein daran befestigtes oder befestigbares elektronisches Gerät mit den oben genannten Merkmalen oder eine Lenkrad-Anordnung mit den oben genannten Merkmalen.

Gemäß einem weiteren Ausführungsbeispiel der vorliegenden Erfindung wird ein Verfahren zum Befestigen eines elektronischen Geräts an einem Lenkrad eines Fahrzeugs geschaffen, wobei das elektronische Gerät ein Gehäuse und eine daran angebrachte elektronische Funktionseinheit enthält, und wobei bei dem Verfahren eine Befestigungseinrichtung des elektronischen Geräts, die an dem Gehäuse angebracht ist, an dem Lenkrad befestigt wird.

Gemäß noch einem anderen Ausführungsbeispiel der vorliegenden Erfindung wird ein elektronisches Gerät mit den oben genannten Merkmalen, eine Lenkrad-Anordnung mit den oben genannten Merkmalen oder ein Fahrzeug mit den oben genannten Merkmalen zum Durchführen einer Diagnose, insbesondere zum Durchführen einer Abgasuntersuchung, eines Fahrzeugs verwendet.

Im Rahmen dieser Beschreibung kann unter dem Begriff "elektronisches Gerät" jedes Elektrogerät verstanden werden, das unter Einsatz von elektronischen Komponenten einem Benutzer einen Dienst oder eine Anwendung bereitstellt. Insbesondere kann ein solches elektronisches Gerät zum Betrieb eine Versorgung mit elektrischer Energie benötigen. Ein solches elektronisches Gerät kann einen Prozessor zum Durchführen von Rechenoperationen aufweisen. Ein solches elektronisches Gerät kann alternativ oder ergänzend einen elektronischen Speicher zum Speichern von elektronischen Daten aufweisen. Ein solches elektronisches Gerät kann alternativ oder ergänzend eine Benutzerschnittstelle aufweisen, mittels welcher ein menschlicher Benutzer mit dem elektronischen Gerät kommunizieren kann. Ein solches elektronisches Gerät kann alternativ oder ergänzend eine Kommunikationsschnittstelle aufweisen, mittels welcher ein kommunizierfähig gekoppeltes anderes Gerät mit dem elektronischen Gerät kommunizieren kann.

Unter dem Begriff "elektronische Funktionseinheit" kann insbesondere eine Komponente oder ein Funktionskreis eines elektronischen Geräts verstanden werden, welche/r eine dem elektronischen Gerät zugeordnete Funktion bereitstellt, auf die ein Benutzer zugreifen kann. Die elektronische Funktionseinheit kann zum Beispiel durch zumindest einen Teil des Prozessors und/oder durch zumindest einen Teil des elektronischen Datenspeichers realisiert sein, die programmtechnisch derart eingerichtet sein können, die gewünschte Applikation bereitzustellen. Die elektronische Funktionseinheit kann Hardware-Komponenten aufweisen, kann Software-Komponenten aufweisen oder kann hybrid ausgestaltet sein, das heißt unter Einsatz von Hardware-Komponenten und Software-Komponenten.

Unter dem Begriff "Befestigungseinrichtung" kann insbesondere jede körperliche Struktur verstanden werden, die speziell konfiguriert bzw. angepasst ist, eine Befestigung zwischen dem elektronischen Gerät einerseits und einem Lenkrad andererseits durch Ausüben einer entsprechenden Befestigungskraft zu realisieren. Eine solche Kraft kann zum Beispiel eine mechanische Kraft, zum Beispiel eine Klemmkraft (zum Beispiel bewirkt durch eine Federklemme), eine Saugkraft (zum Beispiel bewirkt durch einen Saugnapf), eine Haftkraft (zum Beispiel bewirkt durch Klebstoff), eine Schraubkraft (zum Beispiel bewirkt durch eine Verschraubung), etc. sein. Alternativ kann die Kraft eine magnetische Kraft, zum Beispiel hervorgerufen durch gegenpolige Permanentmagneten, oder eine elektrische Kraft sein.

Unter dem Begriff "Durchführen einer Diagnose" (bzw. einer Funktionsdiagnose) kann insbesondere verstanden werden, dass das elektronische Gerät zum Diagnostizieren eines Zustands eines Kraftfahrzeuges, insbesondere einer Funktion oder Funktionsfähigkeit oder Fehlfunktion des Fahrzeugs, beitragen kann oder die Diagnose steuern kann. Ein Beispiel für eine solche Diagnose ist das Untersuchen, ob eine Funktionskomponente des Fahrzeugs noch vorgebbaren Betriebsfähigkeitskriterien entspricht. Zum Durchführen einer solchen Diagnose kann das elektronische Gerät selbst oder unterstützt durch ein kommunizierfähig gekoppeltes weiteres Gerät Messdaten betreffend das Fahrzeug aufnehmen. Diese Messdaten können entweder unverarbeitet durch das elektronische Gerät angezeigt werden oder in dem elektronischen Gerät einer Verarbeitung unterzogen werden, so dass die aus der Verarbeitung resultierenden Ergebnisse mittels des elektronischen Geräts angezeigt werden können.

Unter dem Begriff "Durchführen einer Abgasuntersuchung" kann insbesondere verstanden werden, dass an einem Kraftfahrzeug mittels eines Abgasmessgeräts mindestens eine Eigenschaft von Abgasen des Kraftfahrzeugs gemessen werden kann. Dies kann zum Beispiel durch ein von dem elektronischen Gerät separates Abgasmessgerät ermittelt werden, dass an einem Auspuff des Kraftfahrzeugs angeordnet werden kann, um dort während des Betriebs des Kraftfahrzeugs Abgase zu untersuchen. Das elektronische Gerät kann zum Beispiel drahtgebunden oder drahtlos mit diesem Abgasmessgerät kommunizieren und dieses steuern, kann die gemessenen Daten bedarfsweise verarbeiten und kann Ergebnisse der Abgasuntersuchung einem Benutzer anzeigen. Insbesondere kann gemäß exemplarischen Ausführungsbeispielen der Erfindung das elektronische Gerät zum Bereitstellen einzelner Funktionen, eines Teils der Funktionen, oder aller Funktionen eingerichtet sein, wie sie zum Beispiel von einer Vorrichtung mit der Typenbezeichnung IQ 310 der Anmelderin geleistet wird.

Unter dem Begriff "Fahrzeug" kann insbesondere ein Automobil (zum Beispiel ein Kraftfahrzeug, insbesondere ein Personenkraftfahrzeug oder Lastkraftfahrzeug) verstanden werden. Es ist aber auch möglich, das erfindungsgemäße System an einem Motorrad, einem Zug, einem Schiff oder einem Luftfahrzeug (zum Beispiel einem Flugzeug oder einem Hubschrauber) oder dergleichen zu implementieren.

Gemäß einem exemplarischen Ausführungsbeispiel der Erfindung wird ein elektronisches Gerät zur Verwendung in Kombination mit einem Fahrzeug mit einer Befestigungseinrichtung ausgestattet, die ein betriebssicheres lösbares Befestigen bzw. eine qualifizierte Fixierung des elektronischen Geräts speziell an einem Lenkrad des Fahrzeugs erlaubt. Da während der Betätigung eines solchen elektronischen Geräts zum Beispiel zu Diagnosezwecken ein Benutzer in vielen Fällen Operationen an dem Fahrzeug durchführen möchte (zum Beispiel den Motor anlassen möchte, Gas geben möchte, Lichter ein- oder ausschalten möchte, die Gangschaltung betätigen möchte, etc.) benötigt ein Benutzer eine gewisse Freiheit in der Benutzung seiner Hände. Gleichzeitig soll das elektronische Gerät während des Betriebs des Kraftfahrzeugs aber nicht unbefestigt an dem Kraftfahrzeug aufgelegt werden, da sonst ein Herunterfallen und Zerstören des elektronischen Geräts drohen kann. Um diese Rahmenbedingungen zu erfüllen, ist erfindungsgemäß eine Befestigbarkeit des elektronischen Geräts an dem Lenkrad durch eine speziell angepasste Befestigungseinrichtung ermöglicht. Hat der Benutzer das elektronische Gerät an dem Lenkrad befestigt, so kann er bei bestimmungsgemäßer Einnahme des Fahrersitzes eines Fahrzeugs das elektronische Gerät gut übersehen und bequem bedienen, ist aber nicht bezüglich der gleichzeitigen Handhabung des Fahrzeugs eingeschränkt.

Im Weiteren werden weitere Ausgestaltungen des elektronischen Geräts beschrieben. Diese gelten auch für die Lenkrad-Anordnung, das Fahrzeug, das Verfahren und die Verwendung.

Gemäß einem exemplarischen Ausführungsbeispiel kann die Funktionseinheit eine elektronische Anzeige aufweisen. Eine solche elektronische Anzeige kann zum Beispiel eine Flüssigkristallanzeige, eine Plasmaanzeige, etc. sein, an welcher elektronische Daten visuell angezeigt werden können. Vorzugsweise kann eine solche elektronische Anzeige als Touchscreen (Sensorbildschirm) ausgestaltet sein, so dass ein Benutzer unter Verwendung seiner Finger oder eines Bedienungsstifts die elektronische Anzeige entsprechend bedienen kann, um zum Beispiel Eingabekommandos einzugeben.

Die Funktionseinheit kann eine Mensch-Maschine-Schnittstelle aufweisen. Eine solche Benutzerschnittstelle erlaubt es, dass das elektronische Gerät dem Benutzer Informationen anzeigt, dass ein Benutzer aber auch Eingabebefehle an das elektronische Gerät eingeben kann. Zum Beispiel kann eine solche Mensch-Maschine-Schnittstelle eine Tastatur, Knöpfe, einen Bedienhebel und/oder eine Sprachsteuerung enthalten.

Die elektronische Funktionseinheit kann einen Tablet-Computer (Tablet-PC) oder Flachcomputer aufweisen. Unter einem Tablet-PC kann ein laptopartiger Mobilcomputer verstanden werden, der als portables Gerät ausgestaltet sein kann. Ein solcher Tablet-Computer kann einem Benutzer alle wesentlichen Funktionen eines Personalcomputers bereitstellen.

Die elektronische Funktionseinheit kann eine elektronische Diagnoseeinheit zum Durchführen einer Diagnose bei dem Fahrzeug enthalten. Darunter kann ein Prozessor verstanden werden, der eine Diagnose gemäß obiger Definition durchführen kann. Eine solche Diagnoseeinheit kann selbst oder durch ein kommunizierfähig gekoppeltes anderes Gerät eine Messung an dem Kraftfahrzeug durchführen, wie zum Beispiel zum Erfassen von Abgaswerten oder Daten betreffend eine Klimaanlagefunktion. Auch eine Funktionsfähigkeit aller im Kraftfahrzeug verbauten elektrischen und elektronischen Systeme, von Motordaten oder von Betriebsdaten des Kraftfahrzeugs (Kilometerstand, Fehlerspeicher, etc.) können im Rahmen einer solchen Diagnose erfasst werden.

Gemäß einem exemplarischen Ausführungsbeispiel kann die Befestigungseinrichtung des elektronischen Geräts zum abnehmbaren oder lösbaren Befestigen des elektronischen Geräts an dem Lenkrad eingerichtet sein. Mit anderen Worten kann die Befestigungseinrichtung so konfiguriert sein, dass sie auch nur vorübergehend an dem Lenkrad befestigt werden kann und nach Verwendung des elektronischen Geräts an dem Fahrzeug mit einem oder wenigen Handgriffen durch den Benutzer von dem Lenkrad wieder entfernt werden kann. Auf diese Weise kann das elektronische Gerät von einem Benutzer flexibel an unterschiedlichen Kraftfahrzeugen mit geringem Montageaufwand verwendet werden.

Weiter insbesondere kann die Befestigungseinrichtung zum händisch abnehmbaren Befestigen des elektronischen Geräts an dem Lenkrad eingerichtet sein. Gemäß einer solchen Ausgestaltung kann die Befestigungseinrichtung zum Beispiel zum Aufstecken oder Aufklemmen an dem Lenkrad vorgesehen sein, so dass ein Benutzer ohne Werkzeuge und bloß unter Einsatz seiner Hände eine Montage und Demontage des elektronischen Geräts vornehmen kann.

Die Befestigungseinrichtung kann einen Haltebügel aufweisen. Ein solcher Haltebügel kann an dem Lenkrad befestigbar und (zum Beispiel mittels einer oder mehrerer Verbindungsstangen) mit dem Gehäuse verbunden sein. Ein derartiger Haltebügel kann einen oder vorzugsweise zwei parallel verlaufende Verbindungsstangen aufweisen, deren einer Endabschnitt an dem Gehäuse angebracht ist und deren anderer Endabschnitt ein Strukturmerkmal zum Befestigen an dem Lenkrad aufweisen kann. Insbesondere kann ein solcher an einem Lenkrad befestigbarer Abschnitt des Haltebügels einen Klemmabschnitt aufweisen, der an dem Lenkrad verklemmbar sein kann. Mittels Verklemmens (zum Beispiel unter Einsatz einer Federwirkung) kann eine ausreichend zuverlässige Befestigungskraft bereitgestellt werden, kann aber gleichzeitig eine bequeme Abnehmbarkeit des elektronischen Geräts von dem Lenkrad ermöglicht werden. Zum Beispiel kann ein solcher Klemmabschnitt durch eine umgebogene Stange realisiert sein, die in einem Endabschnitt einen hakenförmigen langgestreckten Aufnahmeraum für ein Lenkrad bildet. Bei Vorsehen von zwei parallel zueinander verlaufenden Stangen des Haltebügels können in einem Klemmabschnitt beide Stangen umgebogen und durch eine quer verlaufende weitere Verbindungsstange verbunden sein. Somit kann der Klemmabschnitt durch zwei parallel verlaufende, hakenförmig gebogene und seitlich voneinander beabstandete Stangenabschnitte gebildet sein, die durch eine geradlinig verlaufende Querstange verbunden sein können. Der Klemmabschnitt kann aus einer einstückigen, entsprechend umgebogenen Stange (zum Beispiel aus Metall) gebildet sein. Alternativ zu einem Klemmabschnitt kann an der Befestigungseinrichtung ein (zum Beispiel hakenförmiger) Einhängabschnitt vorgesehen sein, der an dem Lenkrad einhängbar sein kann.

Der Haltebügel kann zum selektiven Ausziehen von dem Gehäuse eingerichtet sein und zum selektiven Einziehen an das Gehäuse eingerichtet sein.

Das Ein- bzw. Ausziehen kann zum Beispiel mittels einer Schiebebewegung oder mittels einer Klappbewegung der Befestigungseinrichtung relativ zu dem Gehäuse erfolgen.

Somit kann, zum Beispiel zum Transportieren des elektronischen Geräts, der Haltebügel ganz oder teilweise an das Gehäuse angelegt sein. Zum Beispiel kann der Haltebügel in eine Aufnahmemulde an dem Gehäuse eingelegt sein, um sich so an das Gehäuse anzuschmiegen, womit keine überstehenden Teile aus dem Gehäuse hervorragen. Alternativ kann der Haltebügel ganz oder teilweise in das Gehäuse eingeführt sein, das heißt darin zumindest teilweise aufgenommen sein.

Vor Verwenden des elektronischen Geräts kann zum Befestigen des elektronischen Geräts an dem Lenkrad der Haltebügel ein Stück weit oder vollständig ausgezogen werden.

Zum Beispiel kann eine solche ein- oder ausziehbare Konfiguration unter Verwendung eines Teleskopmechanismus realisiert werden. Eine solche Verwendung von ineinander einführbaren Teleskopstangen ermöglicht eine platzsparende Anordnung des Haltebügels und somit eine kompakte Bauweise des elektronischen Geräts.

In dem ausgezogenen Betriebszustand kann sich der Haltebügel von einem oberen Bereich des Gehäuses aus zu einem oberen Bereich eines Rings des Lenkrads hin erstrecken. Der obere Bereich des Gehäuses bezieht sich dabei auf eine bestimmungsgemäß Verwendung des elektronischen Geräts, das heißt eine Orientierung des elektronischen Geräts, wenn ein Benutzer dieses verwendet. Der obere Bereich des Rings bezieht sich dabei auf eine obere Erstreckungsgrenze des Rings, wenn das Lenkrad in einem Fahrzeug montiert ist. Somit überbrückt der Haltebügel einen Abstand zwischen dem Ring des Lenkrads und dem Gehäuse und stellt somit eine ausreichend sichere Befestigung des elektronischen Geräts an dem Lenkrad sicher, wobei aufgrund der beschriebenen Orientierung die Gravitationskraft die Befestigungswirkung unterstützt.

Der Haltebügel kann insbesondere eingerichtet sein, sich in dem ausgezogenen Betriebszustand bis zu einem benutzerseitig wählbaren, einstellbaren oder selektierbaren Abstand hin von dem Gehäuse aus zu erstrecken. Anders ausgedrückt kann der Haltebügel konfiguriert sein, an Lenkrädern unterschiedlicher Größen angebracht werden zu können. Zu diesem Zweck kann der Bereich des Haltebügels, der gegenüber dem Gehäuse ausgefahren ist, benutzerdefiniert eingestellt werden. Bei einem etwas größeren Lenkrad kann der Haltebügel somit weiter ausgefahren werden als bei einem etwas kleineren Lenkrad. Damit ist ein universelle Verwendbarkeit des elektronischen Geräts an unterschiedlichen Lenkrädern ermöglicht, was die Flexibilität bei der Verwendung signifikant verbessert. Es sei angemerkt, dass die Größe von Lenkrädern an die Anatomie menschlicher Benutzer angepasst sind und somit nur innerhalb eines relativ geringen Größenbereichs variieren. In einem Ausführungsbeispiel ist die maximale Länge der Befestigungseinrichtung in einem maximal ausgefahrenen Zustand in einem Bereich zwischen 10 cm und 40 cm, insbesondere in einem Bereich zwischen 15 cm und 25 cm

Gemäß einem Ausführungsbeispiel können der Haltebügel und das Gehäuse derart aufeinander angepasst sein, dass der Haltebügel in dem eingezogenen Betriebszustand an das Gehäuse anlegbar oder zumindest teilweise im Inneren des Gehäuses aufnehmbar ist. Der Haltebügel kann eingerichtet sein, sich in dem eingezogenen Betriebszustand an das Gehäuse anzulegen. Anders ausgedrückt kann der Haltebügel im eingefahrenen Zustand an dem Gehäuse, aber noch außerhalb des Gehäuses, anliegen. Zum Beispiel kann hierfür eine Aufnahmemulde an dem Gehäuse angeformt sein, die zum Aufnehmen des Haltebügels entsprechend konfiguriert ist. Alternativ kann im eingezogenen Betriebszustand der Haltebügel im Inneren des Gehäuses aufgenommen werden, das heißt dann im Wesentlichen vollständig in dem Gehäuse integriert sein. Diese Konfiguration ermöglicht es, den Haltebügel im Inneren des Gehäuses sicher zu schützen und dem elektronischen Gerät nach außen hin kompakt auszugestalten.

Die Befestigungseinrichtung kann zumindest in einem an dem Lenkrad befestigbaren Bereich mit einer Schutzbeschichtung zum Schützen des Lenkrads vor einer Beschädigung versehen sein. Eine solche Schutzbeschichtung, zum Beispiel aus Gummi, Schaumstoff oder einem anderen dämpfenden oder flexiblen Material, kann somit zuverlässig vermeiden, dass bei vorübergehendem Befestigen des elektronischen Geräts an einem Lenkrad dieses beschädigt, zum Beispiel verkratzt wird.

Das elektronische Gerät kann insbesondere als Kraftfahrzeugdiagnosegerät ausgestaltet sein. Ein solches Kraftfahrzeugdiagnosegerät enthält in einem Prozessor bzw. einem Speicher die entsprechenden Algorithmen und Steuerdaten, die zum Durchführen einer Diagnose eines Kraftfahrzeugs mit dem elektronischen Gerät erforderlich sind.

Das elektronische Gerät kann als portables elektronisches Gerät eingerichtet sein. Mit anderen Worten können die Dimension und das Gewicht des mobilen elektronischen Geräts derart konfiguriert sein, dass dieses von einem menschlichen Benutzer bequem transportiert und mitgeführt werden kann. Somit ist eine benutzerfreundliche Verwendbarkeit des elektronischen Geräts in unterschiedlichen Kraftfahrzeugen ermöglicht.

Im Weiteren wird eine Ausgestaltung der Lenkrad-Anordnung beschrieben. Diese gilt auch für das elektronische Gerät, das Fahrzeug, das Verfahren und die Verwendung.

Gemäß einem exemplarischen Ausführungsbeispiel der Lenkrad-Anordnung kann das Lenkrad einen Ring aufweisen, der mittels mindestens einer Speiche mit einem Lenkradtopf verbunden ist. Die Befestigungseinrichtung kann eingerichtet und mit dem Gehäuse derart verbunden oder verbindbar sein, dass die Befestigungseinrichtung den Ring rückseitig umgreifen kann, an der mindestens einen Speiche vorbeiführbar ist und das Gehäuse vorderseitig auf dem Lenkradtopf auflegbar ist. Das Lenkrad kann somit einen Lenkring (den ein Benutzer händisch zum Lenken des Fahrzeugs betätigen kann) aufweisen, der mittels einer oder mehrerer Lenkradspeichen mit einem zentralen Lenkradtopf verbunden ist. Ein solcher Lenkradtopf kann zum Beispiel Komponenten wie eine Betätigungstaste für die Abgabe eines Hupsignals, etc., enthalten. Eine oder mehrere Speichen können diesen Lenkradtopf mit dem darum herum angeordneten im Wesentlichen kreisförmigen Ring verbinden. Gemäß dem beschriebenen Ausführungsbeispiel kann die Befestigungseinrichtung eingerichtet und mit dem Gehäuse derart verbunden sein, dass die Befestigungseinrichtung den Ring rückseitig umgreifen kann, zwischen den Speichen durch das Lenkrad nach vorne durchführbar ist und das Gehäuse vorderseitig auf dem Lenkradtopf auflegbar oder nahe dem Lenkradtopf anordbar ist. Unter "rückseitig" wird eine Seite des Lenkrads verstanden, die von einem Benutzer auf einem Fahrersitz des Fahrzeugs abgewandt ist. Demgegenüber kann unter vorderseitig verstanden werden, dass die entsprechende Seite des Lenkrads dem Benutzer auf dem Fahrersitz des Fahrzeugs zugewandt ist. Mittels rückseitigen Anbringens der Befestigungseinrichtung und Führens des elektronischen Geräts auf eine Vorderseite des Lenkrads in einer Weise, dass das Gehäuse samt elektronischer Funktionseinheit nahe dem Lenkradtopf positioniert ist, ist eine besonders stabile Befestigung ermöglicht. Ferner ist in dieser Konfiguration selbst bei Einwirkung von Kräften, zum Beispiel Bremskräften oder Stoßkräften, die Befestigung des elektronischen Geräts an dem Lenkrad zuverlässig garantiert. Der Lenkradtopf kann vorteilhaft zum Aufnehmen des Gehäuses mitverwendet werden. Das Gehäuse liegt dann in einer Weise auf dem Lenkrad auf, dass ein Benutzer auf dem Fahrzeugsitz das elektronische Gerät bequem bedienen kann. Die Befestigungseinrichtung ist nicht nur ausreichend weit von dem Benutzer entfernt, um diesen nicht zu stören, sondern befestigt, insbesondere verklemmt, das elektronische Gerät zuverlässig mit dem Lenkrad.

Im Weiteren wird eine Ausgestaltung des Verfahrens beschrieben. Diese gilt auch für das elektronische Gerät, die Lenkrad-Anordnung, das Fahrzeug und die Verwendung.

Vor dem Befestigen oder nach dem Befestigen oder alternativ zu dem Befestigen der Befestigungseinrichtung des elektronischen Geräts an dem Lenkrad ist es gemäß einem Ausführungsbeispiel auch möglich, die Befestigungseinrichtung bei geöffnetem Fahrzeugfenster an einem Fahrzeugtürrahmen des Fahrzeugs einzuhängen. Vor oder nach oder alternativ zu dem Befestigen der Befestigungseinrichtung des elektronischen Geräts an dem Lenkrad oder an dem Fahrzeugtürrahmen ist es auch möglich, die Befestigungseinrichtung an einer geöffneten Motorhaube des Fahrzeugs einzuhängen. Dies kann durch eine entsprechende Formgebung und Dimensionierung des Haltebügels erreicht werden, der insbesondere einen entsprechend konfigurierten Klemmhaken aufweisen kann, so dass bei Einhängen der Befestigungseinrichtung an Fahrzeugtürrahmen bzw. Motorhaube das mit der Befestigungseinrichtung verbundene elektronische Gerät gehalten wird, ohne dass ein Benutzer hierfür dauerhaft seine Hände benutzen muss.

Im Folgenden werden exemplarische Ausführungsbeispiele der vorliegenden Erfindung mit Verweis auf die folgenden Figuren detailliert beschrieben.
Fig. 1 zeigt eine Seitenansicht einer Lenkrad-Anordnung gemäß einem exemplarischen Ausführungsbeispiel der Erfindung.
Fig. 2 zeigt eine Vorderansicht der Lenkrad-Anordnung gemäß Fig. 1.
Fig. 3 zeigt ein Cockpit eines Fahrzeugs gemäß einem exemplarischen Ausführungsbeispiel der Erfindung, an dem ein elektronisches Gerät der Lenkrad-Anordnung gemäß Fig. 1 und Fig. 2 befestigt ist.
Fig. 4 bis Fig. 6 zeigt dasselbe elektronische Gerät wie in Fig. 1 bis Fig. 3, befestigt an einem anderen Lenkrad bzw. in einem anderen Kraftfahrzeug.
Fig. 7 zeigt eine rückseitige Ansicht eines elektronischen Geräts gemäß einem exemplarischen Ausführungsbeispiel der Erfindung.
Fig. 8 zeigt eine Befestigungseinrichtung gemäß einem exemplarischen Ausführungsbeispiel der Erfindung.
Fig. 9 zeigt eine Seitenansicht des elektronischen Geräts gemäß Fig. 7.
Fig. 10 und Fig. 11 zeigt rückseitige Ansichten eines elektronischen Geräts gemäß einem anderen exemplarischen Ausführungsbeispiel der Erfindung in einem eingezogenen und in einem ausgezogenen Betriebszustand einer zugehörigen Befestigungseinrichtung.

Gleiche oder ähnliche Komponenten in unterschiedlichen Figuren sind mit gleichen Bezugsziffern versehen.

Um einem Anwender ein hohes Maß an Bewegungs- und Handlungsfreiheit zu ermöglichen, können erfindungsgemäß mobile Computersysteme und/oder Anzeigegeräte in einem Fahrzeug an einem Lenkrad fixiert werden. Die Art der Fixierung erfolgt ausfallsicher. Das bedeutet insbesondere, dass die Fixierung durch die Lenkradspeichen von hinten nach vorne erfolgen kann.

Somit kann gemäß einem exemplarischen Ausführungsbeispiel ein Lenkradhalter an einem Tablet PC/Anzeigegerät eines Diagnosegeräts vorgesehen werden. Die Fixierung kann über einen Bügel aus Metall oder Kunststoff realisiert werden, der zum Beispiel an der Rückseite des Gehäuses angebracht oder in das Gehäuse integriert ist und sich nach oben ausziehen lässt. Der Bügel liegt im eingefahrenen Zustand am Gehäuse an beziehungsweise integriert sich in das Gehäuse. Der Bügel ist im Aufhängungsbereich gummiert oder beschichtet, so dass empfindliche Oberflächen vor einer Beschädigung zuverlässig geschützt werden können. Die Ausformung des Bügels kann auf den durchschnittlichen Radius und Durchmesser verschiedener Lenkräder abgestimmt werden und kann hersteller- und typübergreifend verwendet werden. Die Befestigung an Türrahmen kann bei geöffnetem Fenster aufgrund des Designs der Befestigungseinrichtung ermöglicht sein. Die Ausformung des Bügels kann so angepasst werden, dass der mobile Computer und/oder das Anzeigegerät an geöffneten Motorhauben befestigt werden kann.

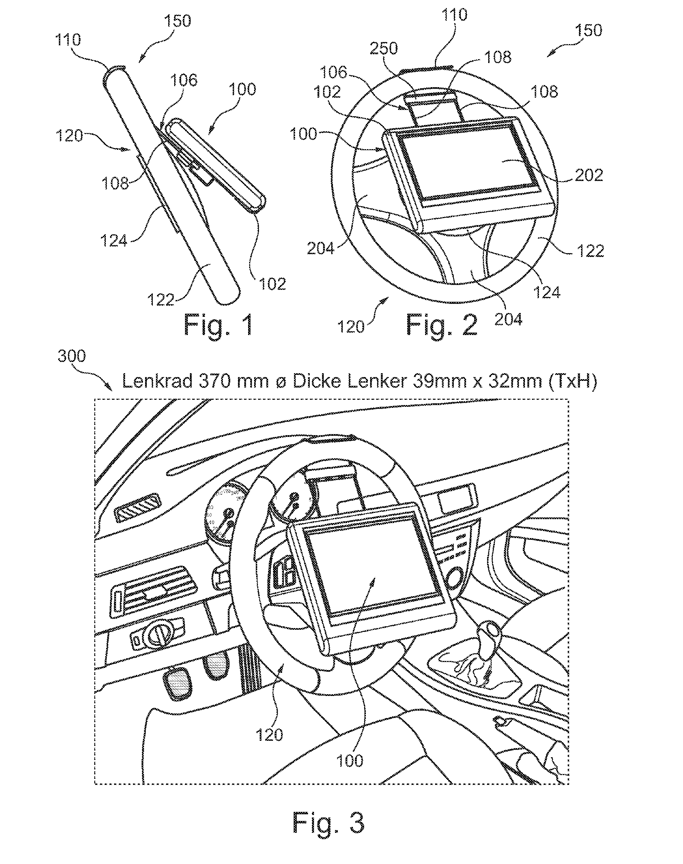

**Fig. 1** zeigt eine Lenkrad-Anordnung 150 für ein Fahrzeug 300 gemäß einem exemplarischen Ausführungsbeispiel der Erfindung. In Fig. 1 ist eine Seitenansicht eines Lenkrads 120 des Fahrzeugs 300 und eines elektronischen Kraftfahrzeugdiagnosegeräts 100 gezeigt, das an dem Lenkrad 120 befestigt ist.

**Fig. 2** zeigt dagegen eine Draufsicht der Lenkrad-Anordnung 150 im Wesentlichen aus der Sicht eines Benutzers, der auf dem Fahrersitz eines Personenkraftfahrzeuges Platz genommen hat und das elektronische Kraftfahrzeugdiagnosegerät 100 betätigbar vor sich positioniert hat. Das elektronische Kraftfahrzeugdiagnosegerät 100 ist an dem Lenkrad 120 angeklemmt.

Das Lenkrad 120 ist ausgestaltet wie in Kraftfahrzeugen üblich und enthält einen Lenkring 122, den ein Benutzer während eines üblichen Lenkvorgangs während eines Kraftfahrzeugbetriebs betätigt. Der Lenkring 122 ist mittels Lenkradspeichen 204 mit einem Lenkradtopf 124 in einem zentralen Abschnitt des Lenkrads 120 verbunden.

Das mobile elektronische Kraftfahrzeugdiagnosegerät 100 ist, wie in Fig. 1 und Fig. 2 gezeigt, von einem Benutzer an dem Lenkrad 120 des Fahrzeugs 300 befestigt worden. Das elektronische Kraftfahrzeugdiagnosegerät 100 weist ein Gehäuse 102 (zum Beispiel ein Kunststoffgehäuse oder ein gummiertes oder beschichtetes Metallgehäuse) auf, in dem ein Prozessor, ein Halbleiterspeicher, ein Akkumulator, etc. enthalten sind. Im Zusammenspiel stellen diese Komponenten eine Kraftfahrzeugdiagnosefunktion bereit. Wenngleich dies nicht in der Figur gezeigt ist, weist das elektronische
Kraftfahrzeugdiagnosegerät 100 eine drahtgebundene und/oder eine drahtlose Kommunikationsschnittstelle auf, die zum Beispiel mit einem Messgerät kommunizieren kann. Ein solches Messgerät kann zum Beispiel Abgaswerte an einem Auspuff des Kraftfahrzeugs 300 messen, während der Benutzer auf dem Fahrersitz des Kraftfahrzeugs 300 sitzt und über das elektronische Kraftfahrzeugdiagnosegerät 100 die Messung steuern oder Überwachen kann. Da das elektronische Kraftfahrzeugdiagnosegerät 100 sicher an dem Lenkrad 120 befestigt ist, hat der Benutzer während der Fahrzeugdiagnose beide Hände frei, um das Fahrzeug 300 zu bedienen.

Das elektronische Kraftfahrzeugdiagnosegerät hat einen Touchscreen 202, über den der Benutzer zum Beispiel mit seinen Fingern oder mit einem Eingabestift Befehle an das elektronische Kraftfahrzeugdiagnosegerät 100 eingeben kann. Der Benutzer kann das mobile elektronische Kraftfahrzeugdiagnosegerät 100 portabel mit sich führen und kann dieses dann an einem beliebigen Kraftfahrzeuglenkrad, wie dem Lenkrad 120, befestigen. Hierfür weist das elektronische Kraftfahrzeugdiagnosegerät 100 eine Befestigungseinrichtung 106 auf, die in diesem Ausführungsbeispiel durch einen Haltebügel 108 aus zwei parallelen Metallstangen gebildet ist. Mittels eines langgestreckten Hakenbereichs oder Klemmabschnitts 110, der zum Einklemmen des Lenkrings 122 über einen größeren Abschnitt hinweg dient (siehe Fig. 2), ist der Haltebügel 108 ausgehend von einer Rückseite (siehe Fig. 1) des Lenkrings 122 des Lenkrads 120 einklemmbar. Von der Rückseite des Rings 122 aus kann dann der Haltebügel 108 zwischen den Speichen 204 zu einer Vorderseite des Lenkrads 120 hindurchgeführt werden. Das Gehäuse 102 und/oder die Befestigungseinrichtung 106 kann/können auf dem Lenkradtopf 124 aufliegen. Dadurch ist eine stabile Auflage des elektronischen Geräts 100 auf dem Lenkradtopf 124 sowie eine stabile Befestigung über den Klemmabschnitt 110 an dem Lenkring 122 ermöglicht.

In der befestigten Position gemäß Fig. 1 und Fig. 2 ist das elektronische Kraftfahrzeugdiagnosegerät 100 dem Benutzer zur Benutzung zugewandt, ohne dass Komponenten des elektronischen Kraftfahrzeugdiagnosegeräts 100 den Benutzer bei der Betätigung stören. Zu diesem Zweck ist insbesondere der Haltebügel 108 im Wesentlichen hinter dem Lenkrad 120 geführt.

Ein optionales Verbindungselement 250 verbindet die beiden Stangen des Haltebügels 108 zur verbesserten Stabilität miteinander und kann einem Benutzer auch als Griffstück dienen.

Der Haltebügel 108 kann aus dem Gehäuse 102 selektiv ausgezogen werden oder in das Gehäuse 102 hineingeschoben werden. Damit kann zum Transportieren des elektronischen Geräts 100 der Haltebügel 108 in dem Gehäuse 102 verstaut werden und kann zum Benutzen wiederum ein gewünschtes Stück weit aus dem Gehäuse 102 herausgezogen werden.

Im Bereich des Klemmabschnitts 110 ist die Befestigungseinrichtung 106 gummiert oder gepolstert, das heißt mit einer Schutzbeschichtung versehen, um das Lenkrad 120 vor einer Beschädigung zu schützen und um die Reibung und somit die Befestigungswirkung zwischen Befestigungseinrichtung 106 und dem Lenkrad 120 weiter zu erhöhen.

**Fig. 3** zeigt ein Szenario, in dem das elektronische Gerät 100 in dem Cockpit eines BMW ® als Fahrzeug 300 aufgenommen ist.

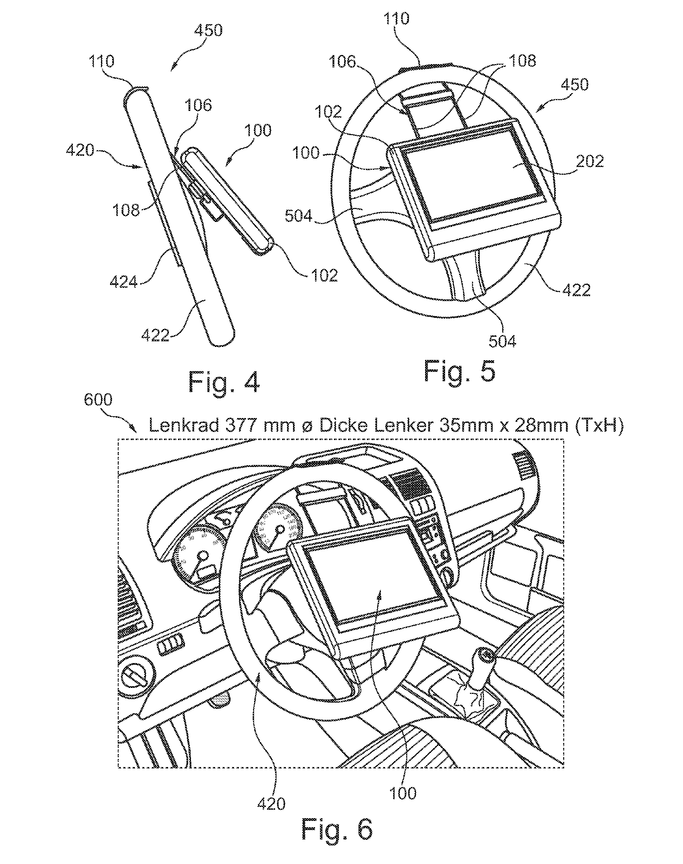

**Fig. 4** und **Fig. 5** zeigen eine Lenkrad-Anordnung 450, bei der dasselbe elektronische Kraftfahrzeugdiagnosegerät 100, das bezugnehmend auf Fig. 1 bis Fig. 3 beschrieben worden ist, an einem anderen Lenkrad 420 mit einem Lenkring 422 etwas anderer Größe angebracht ist. Der Lenkring 422 ist über Lenkradspeichen 504 mit einem Lenkradtopf 424 verbunden. Da der Haltebügel 108 ein benutzerdefiniert variierbares Stück aus dem Gehäuse 102 herausgefahren werden kann, ist die wirksame Länge des Haltebügels 108 auf die Größe eines jeweiligen Lenkrads 120, 420 flexibel anpassbar.

**Fig. 6** zeigt, wie das elektronische Kraftfahrzeugdiagnosegerät 100 an dem Lenkrad 420 eines VW Polo ® als einem anderen Fahrzeug 600 befestigt ist.

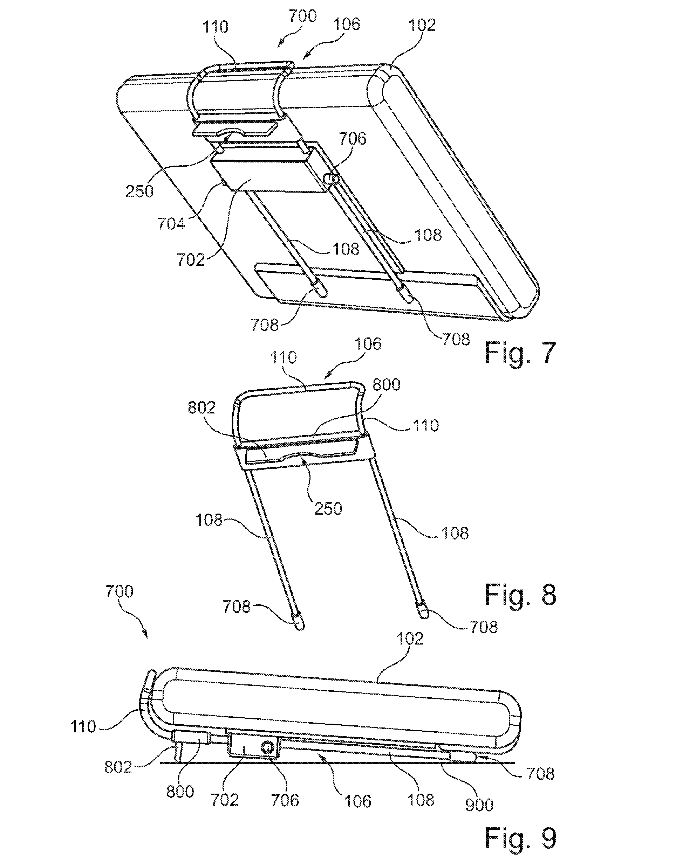

**Fig. 7** zeigt eine rückseitige Detailansicht eines elektronischen Geräts 700 gemäß einem exemplarischen Ausführungsbeispiel der Erfindung.

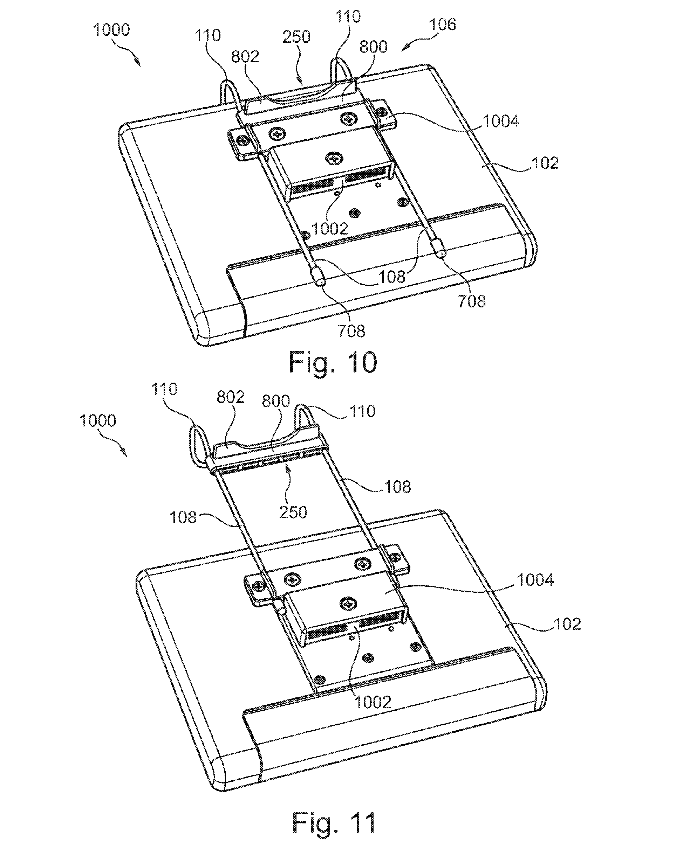

Bei dem elektronischen Gerät 700 ist ein Aufnahmegehäuse 702 an der Rückseite des Gehäuses 102 angebracht. Das Aufnahmegehäuse 702 kann zum Beispiel als U-Bügel (Blechwinkel) mit einem rechten und linken Arretierzapfen 704, 706 oder einer Lasche aus Metall oder Kunststoff zur Arretierung in einer Docking Station ausgestaltet sein. Optional kann das Gehäuse 102 einen in Fig. 10 gezeigten Dockingstecker 1002 aus einem verstärkten Material oder aus Blech aufweisen, was insbesondere als Schutz gegen unsachgemäße Handhabung dienen kann.

Ferner sind an einem Endabschnitt des Haltebügels 108 Schutzkappen 708 mit einem abgerundeten Abschluss, zum Beispiel einen Halbkugelabschluss, vorgesehen. Die Schutzkappen 708 können zum Beispiel aus Gummi gebildet sein oder aus Metall oder Kunststoff bestehen. Die Schutzkappen 708 dienen im gezeigten Beispiel der Ausziehsicherung des Haltebügels 108 und können zum Beispiel mittels Gewinde aufgeschraubt werden oder können verschweißt sein oder vergossen werden.

**Fig. 8** zeigt eine Befestigungseinrichtung 106 gemäß einem exemplarischen Ausführungsbeispiel der Erfindung, wie sie das elektronische Gerät 700 aufweisen kann.

Das Verbindungselement 250 weist eine verstärkende Verbindunglasche 800 und ein zum Beispiel angeformtes oder aufgeschraubtes Griffstück 802 auf, das simultan auch als Aufliege- oder Stützsteg dienen kann.

**Fig. 9** zeigt eine Seitenansicht des elektronischen Geräts 700.

Wie aus Fig. 9 ersichtlich ist, können bei Auflegen des elektronischen Geräts 700 auf eine plane Unterlage 900 der Stützsteg 802 und die Schutzkappen 708 als einzige Komponenten des elektronischen Geräts 700 die Unterlage 900 berühren. Dadurch ist eine Berührung empfindlicher Komponenten des elektronischen Geräts 700 mit der Unterlage 900 vermieden bei gleichzeitig verbesserter Wärmeabfuhr des elektronischen Geräts 700 über dessen Rückseite.

**Fig. 10** zeigt eine rückseitige Ansicht eines elektronischen Geräts 1000 gemäß einem anderen exemplarischen Ausführungsbeispiel der Erfindung in einem eingezogenen Betriebszustand einer zugehörigen Befestigungseinrichtung 106.

**Fig. 11** zeigt eine rückseitige Ansicht des elektronischen Geräts 1000 in einem ausgezogenen Betriebszustand der Befestigungseinrichtung 106.

Gemäß Fig. 10 und Fig. 11 ist ein Docking-Block 1004 vorgesehen, der einen Steck-Anschluss 1002 zum elektrischen Verbinden mit einem anderen Gerät, wie zum Beispiel einer Dockingstation oder eines Erweiterungsmoduls, aufweist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektronisches Gerät (100) zum Befestigen an einem Lenkrad (120) eines Fahrzeugs (300), wobei das elektronische Gerät (100) aufweist:
ein Gehäuse (102), das eine elektronische Funktionseinheit (202) enthält;
eine Befestigungseinrichtung (106), die an dem Gehäuse (102) angebracht ist und zum Befestigen an dem Lenkrad (120) eingerichtet ist.

2. Elektronisches Gerät (100) nach Anspruch 1, wobei die Befestigungseinrichtung (106) zum abnehmbaren, insbesondere zum händisch abnehmbaren, Befestigen des elektronischen Geräts (100) an dem Lenkrad (120) eingerichtet ist.

3. Elektronisches Gerät (100) nach Anspruch 1 oder 2, wobei die Befestigungseinrichtung (106) einen Haltebügel (108) aufweist, der an dem Lenkrad (120) befestigbar, insbesondere mittels eines Klemmabschnitts (110) des Haltebügels (108) an das Lenkrad (120) klemmbar, und mit dem Gehäuse (102) verbunden ist.

4. Elektronisches Gerät (100) nach Anspruch 3, wobei der Haltebügel (108) zum selektiven Ausziehen von dem Gehäuse (102) und Einschieben an das Gehäuse (102) eingerichtet ist.

5. Elektronisches Gerät (100) nach Anspruch 4, wobei der Haltebügel (108) eingerichtet ist, sich in dem ausgezogenen und an dem Lenkrad (120) befestigten Betriebszustand von einem oberen Bereich des Gehäuses (102) aus zu einem oberen Bereich eines Rings (122) des Lenkrads (120) hin zu erstrecken.

6. Elektronisches Gerät (100) nach Anspruch 4 oder 5, wobei der Haltebügel (108) eingerichtet ist, sich in dem ausgezogenen Betriebszustand bis zu einem benutzerseitig einstellbaren Abstand hin von dem Gehäuse (102) aus zu erstrecken.

7. Elektronisches Gerät (100) nach einem der Ansprüche 4 bis 6, wobei der Haltebügel (108) und das Gehäuse (102) derart aufeinander angepasst sind, dass der Haltebügel (108) in dem eingezogenen Betriebszustand an das Gehäuse (102) anlegbar oder ganz oder zumindest teilweise im Inneren des Gehäuses (102) aufnehmbar ist.

8. Elektronisches Gerät (100) nach einem der Ansprüche 1 bis 7, wobei die Befestigungseinrichtung (106) zumindest in einem an dem Lenkrad (120) befestigbaren Bereich mit einer Schutzbeschichtung zum Schützen des Lenkrads (120) vor einer Beschädigung durch die Befestigungseinrichtung (106) versehen ist.

9. Elektronisches Gerät (100) nach einem der Ansprüche 1 bis 8, eingerichtet als portables elektronisches Gerät (100).

10. Lenkrad-Anordnung (150) für ein Fahrzeug (300), wobei die Lenkrad-Anordnung (150) aufweist:
ein Lenkrad (120) für das Fahrzeug (300); und
ein elektronisches Gerät (100) nach einem der Ansprüche 1 bis 9, das zum Befestigen an dem Lenkrad (120) eingerichtet ist.

11. Lenkrad-Anordnung (150) nach Anspruch 10, wobei das Lenkrad (120) einen Ring (122) aufweist, der mittels mindestens einer Speiche (204) mit einem Lenkradtopf (124) verbunden ist, wobei die Befestigungseinrichtung (106) eingerichtet und mit dem Gehäuse (102) derart verbunden oder verbindbar ist, dass die Befestigungseinrichtung (106) den Ring (122) rückseitig umgreifen kann, an der mindestens einen Speiche (204) vorbeiführbar ist und das Gehäuse (102) vorderseitig auf dem Lenkradtopf (124) auflegbar ist.

12. Fahrzeug (300), aufweisend ein daran befestigtes oder befestigbares elektronisches Gerät (100) nach einem der Ansprüche 1 bis 9 oder eine Lenkrad-Anordnung (150) nach Anspruch 10 oder 11.

13. Verfahren zum Befestigen eines elektronischen Geräts (100) an einem Lenkrad (120) eines Fahrzeugs (300), wobei das elektronische Gerät (100) ein Gehäuse (102) und eine daran angebrachte elektronische Funktionseinheit (202) enthält, wobei das Verfahren aufweist:
Befestigen einer Befestigungseinrichtung (106) des elektronischen Geräts (100), die an dem Gehäuse (102) angebracht ist, an dem Lenkrad (120).

14. Verfahren nach Anspruch 13, wobei die Befestigungseinrichtung (106) des elektronischen Geräts (100) bei geöffnetem Fahrzeugfenster an einem Fahrzeugtürrahmen des Fahrzeugs (300) eingehängt wird oder an einer geöffneten Motorhaube des Fahrzeugs (300) eingehängt wird.

15. Verwendung eines elektronischen Geräts (100) nach einem der Ansprüche 1 bis 9, einer Lenkrad-Anordnung (150) nach Anspruch 10 oder 11 oder eines Fahrzeugs (300) nach Anspruch 12 zum Durchführen einer Funktionsfähigkeitsdiagnose, insbesondere zum Durchführen einer Abgasuntersuchung, eines Fahrzeugs (300).
